# EUROPÄISCHE PATENTSCHRIFT

(11) **EP 2 295 485 B1**
(45) Veröffentlichungstag und Bekanntmachung des Hinweises auf die Patenterteilung: **20.05.2015**
(21) Anmeldenummer: 10170391.6
(22) Anmeldetag: 22.07.2010
(51) Int. Cl.: C08G 18/42, C08G 18/48, C08G 18/76, C08J 9/00, C08J 9/12, C08G 18/22, C08G 18/18, C08G 18/38, C08J 9/14, C08G 101/00, C08K 5/521

(54) **Lecithin enthaltende Zusammensetzung geeignet zur Herstellung von Polyurethanhartschäumen**
Compound containing lecithin suitable for producing polyurethane foams
Composition comprenant de la lécithine appropriée à la fabrication de mousses dures de polyuréthane

(30) Priorität: 11.09.2009 DE 102009029363
(43) Veröffentlichungstag der Anmeldung: 16.03.2011
(73) Patentinhaber: Evonik Degussa GmbH, 45128 Essen (DE)
(72) Erfinder: Eilbracht, Christian, 44627, Herne (DE); Glos, Martin, 46325, Borken (DE)

(56) Entgegenhaltungen:
- DE-A1- 2 015 159
- DE-B- 1 149 163
- US-A- 3 007 883
- US-A- 3 288 730
- US-A- 4 024 088

## Beschreibung

Gegenstand der Erfindung sind Lecithin enthaltende Zusammensetzungen geeignet zur Herstellung von Polyurethanhartschäumen, aus diesen hergestellte Polyurethanschäume sowie deren Verwendung.

Bei der Herstellung von Polyurethan-, Polyharnstoff- und Polyisocyanurat-Hartschaumstoffen werden zellstabilisierende Additive eingesetzt, welche für eine feinzellige, gleichmäßige und störungsarme Schaumstruktur sorgen und damit die Gebrauchseigenschaften, besonders das thermische Isolationsvermögen, des Hartschaumstoffes im wesentlichen Maße positiv beeinflussen. Besonders effektiv sind Tenside auf der Basis von Polyethermodifizierten Siloxanen, welche daher den bevorzugten Typ der Schaumstabilisatoren darstellen.

Da es eine Vielzahl verschiedener Hartschaumformulierungen für unterschiedliche Anwendungsgebiete gibt, die individuelle Anforderungen an den Schaumstabilisator stellen, werden Polyethersiloxane unterschiedlicher Struktur eingesetzt. Eines der Auswahlkriterien für den Schaumstabilisator ist dabei das in der Hartschaumformulierung enthaltene Treibmittel.

Verschiedene Veröffentlichungen bezüglich Polyethersiloxan-Schaumstabilisatoren für Hartschaum-Anwendungen wurden bereits publiziert. Die EP 0 570 174 B1 beschreibt ein Polyethersiloxan der Struktur (CH₃)₃SiO[SiO(CH₃)₂]ₓ X [SiO(CH₃)R]_{y}Si(CH₃)₃, dessen Reste R aus einem über eine SiC-Bindung an das Siloxan geknüpften Polyethylenoxid bestehen, welches am anderen Kettenende durch eine C₁-C₆ Acylgruppe endverkappt ist. Dieser Schaumstabilisator eignet sich für die Herstellung von Polyurethan-Hartschäumen unter Verwendung von organischen Treibmitteln, insbesondere Fluorchlorkohlenwasserstoffen wie CFC-11.

Die nächste Generation der Fluorchlorkohlenwasserstofftreibmittel sind so genannte Hydrochlorfluorkohlenwasserstoffe, wie z. B. HCFC-123. Bei der Verwendung dieser Treibmittel für die Polyurethan-Hartschaum-Herstellung eignen sich laut EP 0 533 202 A1 Polyethersiloxane des Strukturtyps (CH₃)₃SiO[SiO(CH₃)₂]ₓ[SiO(CH₃)R]_{y}Si(CH₃)₃. Die Reste R bestehen hier aus SiC-gebundenen Polyalkylenoxiden, die aus Propylenoxid und Ethylenoxid zusammengesetzt sind und am Kettenende eine Hydroxy-, Methoxy- oder Acyloxyfunktion aufweisen können. Der Mindestanteil an Ethylenoxid im Polyether beträgt dabei 25 Massenprozent.

Die neuere Entwicklung bei der Herstellung von Polyurethan-Hartschäumen besteht darin, ganz auf halogenierte Kohlenwasserstoffe als Treibmittel zu verzichten und stattdessen Kohlenwasserstoffe wie Pentan einzusetzen. So beschreibt die EP 1 544 235 die Herstellung von Polyurethanhartschäumen unter Verwendung von Kohlenwasserstoff-Treibmitteln und Polyethersiloxanen der bereits bekannten Struktur (CH₃)₃SiO[SiO(CH₃)₂]ₓ[SiO(CH₃)R]_{y}Si(CH₃)₃ mit einer Mindestkettenlänge des Siloxans von 60 Monomereinheiten und unterschiedlichen Polyethersubstituenten R, deren Mischungsmolgewicht 450 bis 1000 g/mol beträgt und deren Ethylenoxidanteil bei 70 bis 100 mol % liegt.

In jüngerer Zeit werden immer häufiger Polyurethanschäume verlangt, die keine Siloxan-Schaumstabilisatoren aufweisen.

DE 2244350 beschreibt die Verwendung von Copolymeren, die aus N-Vinylpyrrolidon und Maleinsäureestern hergestellt werden, zur Herstellung von Polyurethanschaum.

EP 0734404 beschreibt die Herstellung von Polyurethanschaumstoffen unter Verwendung von nicht-Silicon-haltigen Surfactants. Hier wird ein Copolymer auf Basis von Ethylenoxid und Butylenoxid als Stabilisator beansprucht.

Die beiden oben genannten nicht-Si-haltigen Stabilisatoren sind allerdings nur mit relativ hohem technischen Aufwand herstellbar. Als weitere Nachteil kann zusätzlich die Tatsache angesehen werden, dass diese Copoylmere nicht auf nachwachsenden Rohstoffen basieren und eine schlechte Bioabbaubarkeit haben.

In DE 1149163 wurde die Herstellung von Polyurethanschäumen beschrieben, bei deren Herstellung als Stabilisatoren Lecithin eingesetzt wurde. Es werden dabei spezielle aliphatische Polyesterpolyole und als Treibmittel Wasser eingesetzt. Die erhaltenen Polyurethanschäume waren häufig nur halbstarr und die endgültige Vernetzung dauerte mehrere Tage.

Aufgabe der vorliegenden Erfindung war die Bereitstellung von Polyurethanhartschäumen, bei deren Herstellung auf den Einsatz von Siloxan-haltigen Schaumstabilisatoren verzichtet werden kann und die einen oder mehrere der aus dem Stand der Technik bekannten Nachteile nicht aufweisen.

Überraschenderweise wurde gefunden, dass Zusammensetzungen gemäß Anspruch 1 diese Aufgabe lösen.

Gegenstand der vorliegenden Erfindung sind deshalb Zusammensetzungen, die zur Herstellung von Polyurethanhartschäumen geeignet sind und die zumindest ein Lecithin, zumindest ein Urethan- und/oder Isocyanurat-Katalysator, ein Treibmittel in Form eines Kohlenwasserstoffs mit 3 bis 5 Kohlenstoff-Atomen, zumindest eine Isocyanatkomponente und zumindest eine Polyolkomponente aufweist, **dadurch gekennzeichnet, dass** das Massenverhältnis von Lecithin zu Polyolkomponente kleiner 2,5 zu 100 beträgt.

Außerdem ist Gegenstand der vorliegenden Erfindung ein Verfahren zur Herstellung von Polyurethan-, Polyharnstoff- oder Polyisocyanurat-Hartschaumstoffen, welches dadurch gekennzeichnet ist, dass eine erfindungsgemäße Zusammensetzung eingesetzt wird.

Ebenso sind Gegenstand der vorliegenden Erfindung Polyurethan-, Polyharnstoff- oder Polyisocyanurat-Hartschaumstoffe, die durch Verschäumen einer erfindungsgemäßen Zusammensetzung erhalten werden sowie die Verwendung dieser Polyurethan- oder Polyisocyanurat-Hartschaumstoffe zur Herstellung von Isoliermaterialien, vorzugsweise Dämmplatten, Kühlschränken oder Isolierschäumen.

Die erfindungsgemäße Zusammensetzung hat den Vorteil, dass durch die Verwendung von Lecithin in den angegebenen Mengen Polyurethan-Hartschäume hergestellt werden können, die auf Ester- bzw. Polyesterpolyolen oder Polyetherpolyolen basieren. Die erfindungsgemäßen Zusammensetzungen haben insbesondere den Vorteil, dass organische Treibmittel, insbesondere Kohlenwasserstoffe mit 3 bis 5 Kohlenstoffatomen in der Zusammensetzung besser gelöst werden können. Mit den erfindungsgemäßen Zusammensetzungen ist es deshalb möglich, Polyurethanhartschäume mit einem geringen Einsatz oder sogar ohne den Einsatz von Wasser herzustellen.

Die erfindungsgemäße Zusammensetzung hat außerdem den Vorteil, dass eine Aushärtung der Schäume innerhalb von maximal 24 Stunden erreicht werden kann.

Ein weiterer Vorteil der vorliegenden Zusammensetzung liegt bei der Verwendung des nachwachsenden Rohstoffs Lecithin als Stabilisator zur Herstellung von Polyurethanhartschäumen darin, dass eine Schonung von fossilen Ressourcen erreicht wird.

Die mit der erfindungsgemäßen Zusammensetzung erzeugten Polyurethanschäume, insbesondere die ohne oder unter Verwendung eines sehr geringen Anteils an Wasser hergestellten Schäume haben außerdem den Vorteil, dass sie eine schlechtere Wärmeleitung und damit bessere Isoliereigenschaften aufweisen.

Die erfindungsgemäßen Zusammensetzungen, die Polyurethanschäume selbst sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben, um Angaben in Massen-%.

Die erfindungsgemäßen Zusammensetzungen, die zur Herstellung von Polyurethanschäumen geeignet sind und die zumindest ein Lecithin, zumindest einen Urethan- und/oder Iso¬cyanurat-Katalysator, zumindest ein Treibmittel, zumindest eine Isocyanatkomponente und zumindest eine Polyolkomponente aufweisen, zeichnen sich dadurch aus, dass das Massenverhältnis von Lecithin zu Polyolkomponente kleiner 2,5 zu 100, vorzugsweise kleiner 2 zu 100 bevorzugt kleiner 1 zu 100 beträgt.

Neben den genannten Komponenten kann die erfindungsgemäße Zusammensetzung weitere Bestandteile aufweisen. Insbesondere kann die erfindungsgemäße Zusammensetzung optional (weitere) Treibmittel, optional Flammschutzmitteln und optional weitere Additive, wie z. B. Füllstoffe, Emulgatoren, weitere Si-haltige und nicht Si-haltige, insbesondere Si-haltige und nicht Si-haltige organische Stabilisatoren und Tenside, Viskositätssenker, Farbstoffe, Antioxidantien, UV-Stabilisatoren oder Antistatika, aufweisen.

Als Lecithin kann jedes Phosphatidylcholin eingesetzt werden. Das Lecithin kann eine oder verschiedene Phosphatidylcholin-Verbindungen aufweisen. Vorzugsweise wird ein Gemisch von Phosphatidylcholin eingesetzt. Das oder die Phosphatidylcholin-Verbindungen können unterschiedlichen Ursprungs sein. Vorzugsweise werden eine oder mehrere Phosphatidylcholin-Verbindungen eingesetzt, die aus Soja-Bohnen gewonnen werden.

Das Lecithin kann als Roh-Lecithin, wie es z. B. bei der Raffination pflanzlicher Öle, wie z. B. Sojaöl, als Nebenprodukt anfällt eingesetzt werden. Sogenanntes Soja-Lecithin, welches in der erfindungsgemäßen Zusammensetzung eingesetzt werden kann, enthält neben Phosphatidylcholin außerdem Phosphatidylethanolamin, Phosphatidylinositol, Phosphatidylserin sowie Sterole, Fette und Öle. Aus Eidottern erhaltenes Lecithin enthält dagegen im Wesentlichen Phosphatidylcholin. Es kann vorteilhaft sein, wenn als Lecithine sogenannte hydroxylierte Lecithine eingesetzt werden. Bei diesen sind die ggf. vorhandenen ungesättigten Fettsäuren durch Oxidation (z. B. mit Wasserstoffperoxid) partiell oder vollständig modifiziert worden (RÖMPP Online, Version 3.4, Stichwort "Phosphatidylcholin", 2009 Georg Thieme Verlag). Vorzugsweise wird in der erfindungsgemäßen Zusammensetzung Soja-Lecithin eingesetzt.

Vorzugsweise beträgt der Der Index in der erfindungsgemäßen Zusammensetzung größer 100, vorzugsweise größer 150 bis 250. Der Index beschreibt dabei das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Es kann vorteilhaft sein, wenn das Massenverhältnis von Polyolkomponente zu Isocyanatkomponente in der erfindungsgemäßen Zusammensetzung größer 1 beträgt. Dadurch kann im Schaum das Verhältnis von Urethan- und Isocyanurat-Gruppen in Richtung Isocyanurat-Bildung verschoben werden. Solche Polyisocyanurat- (PIR-)Schäume zeigen häufig ein besseres Brandverhalten als Polyurethan- (PUR-)Schäume.

Als Isocyanatkomponente können die üblichen zur Herstellung von Polyurethan- bzw. Polyisocyanurat-Hartschaumstoffen geeigneten Isocyanatverbindungen eingesetzt werden. Die Isocyanatkomponente kann eine oder mehrere unterschiedliche Isocyanatverbindungen enthalten. Bevorzugte Isocynatkomponenten sind solche, organischen Isocyanate, die zwei oder mehr Isocyanat-Funktionen aufweisen.

Geeignete Isocyanate im Sinne dieser Erfindung sind alle mehrfunktionalen organischen Isocyanate, wie beispielsweise alle Isomere des Diphenylmethandiisocyanats (MDI), insbesondere 4,4'-Diphenylmethandiisocyanat, Toluoldiisocyanat (TDI), Hexamethylendiisocyanat (HMDI) und Isophorondiisocyanat (IPDI). Besonders geeignet ist das als "polymeres MAI" ("crude MDI") bekannte Gemisch aus MDI und höher kondensierten Analogen mit einer mittleren Funktionalität von 2 bis 4.

Als Polyolkomponenten können alle bekannten Polyolverbindungen in der erfindungsgemäßen Zusammensetzung enthalten sein. Vorzugsweise sind als Polyolkomponente organische Substanzen mit mehreren gegenüber Isocyanaten reaktiven Gruppen sowie deren Zubereitungen vorhanden. Bevorzugte Polyole sind alle zur Herstellung von Hartschaumstoffen üblicherweise verwendeten Polyetherpolyole und Polyesterpolyole geeignet. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen).

Als Polyolkomponente sind in der erfindungsgemäßen Zusammensetzung vorzugsweise, bevorzugt ausschließlich Polyesterpolyole vorhanden, die auf aromatischen Säuren oder aliphatischen Säuren mit weniger als 10 Kohlenstoffatomen, die vorzugsweise jeweils zwei oder mehr Säuregruppen aufweisen, basieren. Besonders bevorzugte aliphatische Polyesterpolyole sind solche, die auf Adipinsäure basieren.

Besonders bevorzugte aromatische Polyesterpolyole basieren auf Phthalsäure oder Terephthalsäure und werden unter anderem als Stepanpol^{®} (von Stepan), Terol^{®} (von Oxid), Terate^{®} (von Invista) oder Isoexter^{®} von Coim vermarktet.

Die in der erfindungsgemäßen Zusammensetzung vorhandene Polyolkomponente weist vorzugsweise eine OH-Zahl von größer 100 auf.

In der erfindungsgemäßen Zusammensetzung ist mindestens ein Treibmittel vorhanden, wobei das Massenverhältnis von Treibmittel zu Polyolkomponente vorzugsweise von 1 bis 30 zu 100, bevorzugt von 5 bis 25 zu 100 und besonders bevorzugt von 10 bis 20 zu 100 beträgt. Treibmittel im Sinne dieser Erfindung sind Kohlenwasserstoffe mit 3 bis 5 Kohlenstoff-Atomen, bevorzugt cyclo-, iso- und n-Pentan.

Optional kann als Treibmittel zusätzlich oder an Stelle der oben genannten Treibmittel Wasser eingesetzt werden. In der erfindungsgemäßen Zusammensetzung beträgt das Massenverhältnis von Wasser zu Polyolkomponente vorzugsweise kleiner 5 zu 100, bevorzugt kleiner 1 zu 100 und besonders bevorzugt kleiner 0,5 zu 100. Bevorzugt wird kein Wasser als Treibmittel eingesetzt bzw. ist kein Wasser in der erfindungsgemäßen Zusammensetzung vorhanden.

Das Wasser kann der Zusammensetzung direkt zugegebene werden oder aber als Nebenkomponente eines der Edukte, wie z. B. der Polyolkomponente, mit dieser der Zusammensetzung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können in der erfindungsgemäßen Zusammensetzung solche vorhanden sein, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat.

Geeignete Einsatzmengen richten sich nach dem Typ des Katalysators und liegen üblicherweise im Bereich von 0,05 bis 5 pphp (= Gewichtsteilen bezogen auf 100 Gewichtsteile Polyol) bzw. 0,1 bis 10 pphp für Kaliumsalze.

Als Flammschutzmittel können in der erfindungsgemäßen Zusammensetzung z. B. flüssige organische PhosphorVerbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor, oder halogenierte Verbindungen, beispielsweise halogenierte Polyole, sowie Feststoffe, wie Blähgraphit und Melamin, vorhanden sein.

Der Anteil an Flammschutzmittel an der Zusammensetzung beträgt vorzugsweise 0 bis 50 Massenteile, bevorzugt 0,1 bis 20 Massenteile und besonders bevorzugt 1 bis 10 Massenteile bezogen auf 100 Massenteile Polyol.

Eine typische Polyurethan- bzw. Polyisocyanurat-Hartschaumformulierung im Sinne dieser Erfindung würde ein Raumgewicht von 20 bis 50 kg/m³ ergeben und hätte die folgende Zusammensetzung:

**Tabelle 1**

| Komponente | Gewichtsanteil |
|---|---|
| Polyol | 100 |
| (Amin-)Katalysator | 0,05 bis 5 |
| Kalium-Trimerisierungskatalysator | 0 bis 10 |
| Lecithin | 0,5 bis 2,5 |
| Wasser | 0,01 bis <5, vorzugsweise |
| | 0,1 bis 2,5 |
| Treibmittel 0 bis | 40 |
| Flammschutzmittel | 0 bis 50 |
| | |
| Isocyanat-Index: | größer 150 |

Die erfindungsgemäßen Zusammensetzungen können in einem Verfahren zur Herstellung von Polyurethan- oder Polyisocyanurat-Hartschaumstoffen eingesetzt werden. Die Verfahren können wie dem Fachmann bekannt bzw. im Stand der Technik angegeben durchgeführt werden. Die Verarbeitung der erfindungsgemäßen Zusammensetzungen zu Hartschaumstoffen kann beispielsweise im Handmischverfahren oder bevorzugt mit Hilfe von Hochdruck-Verschäumungsmaschinen erfolgen. Im Falle von Metallverbundelementen kann die Produktion sowohl diskontinuierlich als auch kontinuierlich im sogenannten Doppelband-Verfahren erfolgen.

Typische Formulierungen benötigen eine Reaktionszeit die dem entsprechenden Verschäumungsprozess angepasst ist. Bei der Herstellung von Kühlschränken sollte der Schaum nach typischerweise 3 bis 10 Minuten soweit ausgehärtet sein, dass eine weitere Montage des Gerätes möglich ist. Vorzugsweise werden bei kontinuierlichen Verschäumungen am Ende der Doppelband-Laminatoren die Platten auf die gewünschte Länge zugeschnitten. Dies kann je nach Bandgeschwindigkeit eine Aushärtezeit von 1 bis 10 Minuten ergeben. In diskontinuierlichen Prozessen können auch längere Aushärtezeiten mit bis zu 30 Minuten toleriert werden.

Die Reaktivität einer Formulierung kann unter anderem durch die Klebfreizeit beschrieben werden. Diese gibt an nach welcher Zeit der Schaum beim Berühren der Oberfläche nicht mehr kleben bleibt. Die Klebfreizeit nach dem Verschäumen von erfindungsgemäßen Zusammensetzungen zu Polyurethan- oder Polyisocyanurat-Hartschaumstoffen beträgt vorzugsweise kleiner 10 Minuten, bevorzugt kleiner 5 Minuten.

Durch das Verschäumen der erfindungsgemäßen Zusammensetzungen können die erfindungsgemäßen Polyurethan- oder Polyisocyanurat-Hartschaumstoffe, erhalten werden. Diese zeichnen sich dadurch aus, dass sie bezogen auf im Schaum enthaltene 100 Massenteile Polyolkomponente vorzugsweise weniger als 3, bevorzugt weniger als 2 und besonders bevorzugt weniger als 1 Massenteile Lecithin, enthalten.

Die erfindungsgemäßen Polyurethan- oder Polyi¬socyanurat-Hartschaumstoffen können zur Herstellung von Isoliermaterialien, vorzugsweise Dämmplatten, Montageschäume oder Isolierschäume, wie sie z. B. in Kühl- und Gefriergeräten eingesetzt werden, verwendet werden.

Ein weiteres wichtiges Einsatzgebiet für Polyurethan- bzw. Polyisocyanurat-Hartschaumstoffe stellen Dämmplatten mit flexiblen Deckschichten (wie z.B. Aluminium beschichtetes Papier) dar, welche zur Wärmedämmung beim Bau von Häusern und Gebäuden eingesetzt werden. Daneben gibt es auch Verbundelemente, bestehend aus einem Hartschaum-Kern und festen metallischen Deckschichten (z.B. Stahlblech), welche als Konstruktionselemente ebenfalls im Bausektor eingesetzt werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Verschäumungsbeispiele

Für die anwendungstechnische Ausprüfung der erfindungsgemäßen Formulierungen wurde folgende Schaumformulierung verwendet:

**Tabelle 2: Formulierungen für Hartschaum-Anwendungen (Hartschaum-Paneel / Dämmplatte) in Massenteilen**

| Formulierung | A: PUR-Formulierung | B: PUR-Formulierung | C: PIR-Formulierung |
|---|---|---|---|
| Polyol | Polyetherp olyol-Mischung 100 Teile | Polyetherpolyol-Mischung 100 Teile | Stepanpol^{®} PS 2352* 100 Teile |
| TCPP | | | 15 Teile |
| PMDETA | | | 0,2 Teile |
| DMCHA | 1,5 | | - |
| Kosmos 75 DEG | | | 4,0 Teile |
| Wasser | 2 | 0,5 | 0,25 Teile |
| Cyclopentan | 12 | - | |
| HFC-245fa | - | 18 | |
| n-Pentan | | | 16 Teile |
| Lecithin | Variable | variable | variable |
| Siloxan | Variable | variable | variable |
| | | | |
| MDI ** | 145 Teile | 150 Teile | 172 Teile |

| | | | |
|---|---|---|---|
| * Polyesterpolyol der Firma Stepan ** Desmodur 44V20L: polymeres MDI der Firma Bayer, 200 mPa*s; 31,5% NCO; Funktionalität 2,7 PMDETA: N,N,N',N",N"-Pentamethyldiethylentriamin Kosmos 75 D EG: Kaliumoctoat (75 Gew.-% in Diethylenglycol) DMCHA: N,N-Dimethylcyclohexylamin TCPP: Tris(1-chlor-2-propyl)phosphat | | | |

Die Durchführung der Verschäumungen erfolgte im Handmischverfahren. Dazu wurden die in Tabelle 3 beschriebenen Formulierungen A,B und C mit verschiedenen Siloxanen hergestellt und in einen Becher eingewogen. Anschließend wurde das MDI zugegeben, die Reaktionsmischung mit einem Tellerrührer von 6 cm Durchmesser 5 Sekunden lang bei 3000 Upm verrührt und sofort in eine auf 50°C thermostatisierte Aluminiumform von 50 cm x 25 cm x 5 cm Größe überführt, welche mit Polyethylenfolie ausgekleidet war. Die Einsatzmenge an Schaumformulierung war dabei so bemessen, dass sie um 10 % über der zur Mindestbefüllung der Form notwendigen Menge lag. Nach einer Aushärtezeit von 10 Minuten wurden die Schäume aus der Form entnommen.

Bei den Formulierungen A und B wurde zusätzlich das Löslichkeitsverhalten der Polyolkomponente, also die Mischung ohne Isocyanat, untersucht. In vielen Fällen ist es wichtig, dass die Polyolkomponente lange lagerstabil ist, also keine Phasentrennung aufweist oder noch besser eine klare Mischung darstellt.

In Tabelle 3 sind die Ergebnisse der Verschäumungsversuche zusammengefasst. Es sind dort die jeweils verwendeten Tenside (Surf.), die Systeme (Syst.), die Dosierung (Dos.) der Tenside in Massenteilen pro 100 Teile Polyol, das Löslichkeitsverhalten (Löslichk.) der Polyol-Mischung, die Dichte der Schäume in kg/m³ und der λ-Wert in mW/m·K angegeben. In den nicht erfindungsgemäßen Vergleichsbeipielen wurden die Siloxane TEGOSTAB B 8462, B 8481 und B 8871 verwendet oder es wurde ohne Tensid gearbeitet. Als Lecithin wurde LECICO F 100 der Lecico GmbH eingesetzt.

**Tabelle 3: Übersicht über die Verschäumungsergebnisse:**

| Bsp. | Surf. | Syst. | Dos. | Löslichk. | Dichte | λ-Wert |
|---|---|---|---|---|---|---|
| 1 *) | - | A | 0 | 24 h | 35,1 | 32,3 |
| 2 | Lecithin | A | 2,5 | >30 d (klar) | 31,1 | 24,4 |
| 3 *) | B 8462 | A | 2,5 | 30 d (trüb) | 29,5 | 22,5 |
| 4 | B8462 / Lecithin | A | 1,25 / 1,25 | >30 d (klar) | 30,1 | 23,3 |
| 5 *) | B8462 | A | 1,25 | 24 h | 31, 9 | 31,2 |
| | | | | | | |
| 6 *) | Lecithin | B | 2,3 | 14 d (klar) | 24,2 | 21, 6 |
| 7 *) | B 8481 | B | 2,3 | 14 d (trüb) | 23,1 | 20, 9 |
| 8 *) | B 8481 / Lecithin | B | 1,15 / 1,15 | 14 d (klar) | 24,5 | 22,2 |
| | | | | | | |
| 9 *) | - | C | 0 | n.b. | 31,1 | 25,2 |
| 10 | Lecithin | C | 2,0 | n.b. | 27, 9 | 21.6 |
| | | | | | | |

| | | | | | | |
|---|---|---|---|---|---|---|
| *) nicht erfindungsgemäße Beispiele | | | | | | |

Die Angaben zur Löslichkeit bedeuten: Wenn nur ein Zeitangabe enthalten ist, war nach dieser Zeit eine Phasentrennung zu beobachten. Ist eine Zeitangabe mit der Bemerkung (klar) oder (trüb) enthalten, bedeutet dies, dass bis zu diesem Zeitpunkt keine Phasentrennung zu beobachten war, aber ggf. eine Trübung beobachtet werden konnte.

Die Beispiele mit System A zeigen, dass Verschäumungen mit Lecithin zu PU-Hartschäumen führen, die den technischen Anforderungen gerecht werden.

Zusätzlich bringt die Verwendung von Lecithin noch den Vorteil, dass die Polyolmischung länger lagerstabil und klar ist. Die nicht-erfindungsgemäßen Beispiele zeigen beide eine ungenügende Lagerstabilität der Polyolmischung.

Ein analoger Effekt konnte bei der Verschäumung von Formulierung B beobachtet werden.

## Patentansprüche

1. Zusammensetzung, die zur Herstellung von Polyurethanhartschäumen geeignet ist und die zumindest ein Lecithin, zumindest ein Urethan- und/oder Isocyanurat-Katalysator, zumindest ein Treibmittel, zumindest eine Isocyanatkomponente und zumindest eine Polyolkomponente aufweist, **dadurch gekennzeichnet, dass** das Massenverhältnis von Lecithin zu Polyolkomponente kleiner 2,5 zu 100 beträgt und als Treibmittel Kohlenwasserstoffe mit 3 bis 5 Kohlenstoff-Atomen enthält.

2. Zusammensetzung nach Anspruch 1, **dadurch gekennzeichnet, dass** Wasser in der Zusammensetzung enthalten ist und das Massenverhältnis von Wasser zu Polyolkomponente kleiner 5 zu 100 beträgt.

3. Zusammensetzung nach Anspruch 1 oder 2, **dadurch gekennzeichnet, dass** der Index größer 150 beträgt, wobei der Index das Verhältnis von tatsächlich eingesetztem Isocyanat zu für eine stöchiometrische Umsetzung mit Polyol berechnetem Isocyanat beschreibt.

4. Zusammensetzung nach zumindest einem der Ansprüche 1 bis 3, **dadurch gekennzeichnet, dass** das Massenverhältnis von Polyolkomponente zu Isocyanatkomponente größer 1 beträgt.

5. Zusammensetzung nach zumindest einem der Ansprüche 1 bis 4, **dadurch gekennzeichnet, dass** als Polyolkomponente, Polyesterpolyole vorhanden sind, die auf aromatischen Säuren oder aliphatische Säuren mit weniger als 10 Kohlenstoffatomen basieren.

6. Zusammensetzung nach zumindest einem der Ansprüche 1 bis 5, **dadurch gekennzeichnet, dass** ein Treibmittel vorhanden ist, wobei das Massenverhältnis von Treibmittel zu Polyolkomponente von 1 bis 30 zu 100 beträgt.

7. Zusammensetzung nach Anspruch 6, **dadurch gekennzeichnet, dass** das Treibmittel ausgewählt ist aus Kohlenwasserstoffen mit 5 Kohlenstoffatomen.

8. Verfahren zur Herstellung von Polyurethan- oder Polyisocyanurat-Hartschaumstoffen, **dadurch gekennzeichnet, dass** eine Zusammensetzung gemäß zumindest einem der Ansprüche 1 bis 7 eingesetzt wird.

9. Polyurethan- oder Polyisocyanurat-Hartschaumstoffe, erhältlich durch Verschäumen einer Zusammensetzung gemäß einem der Ansprüche 1 bis 7.

10. Verwendung von Polyurethan- oder Polyisocyanurat-Hartschaumstoffen gemäß Anspruch 9 zur Herstellung von Isoliermaterialien, Dämmplatten, Montageschäumen oder Isolierschäumen.

## Claims

1. Composition which is suitable for producing rigid polyurethane foams and comprises at least one lecithin, at least one urethane and/or isocyanurate catalyst, at least one blowing agent, at least one isocyanate component and at least one polyol component, **characterized in that** the mass ratio of lecithin to polyol component is less than 2.5:100 and hydrocarbons having from 3 to 5 carbon atoms are present as blowing agents.

2. Composition according to Claim 1, **characterized in that** water is present in the composition and the mass ratio of water to polyol component is less than 5:100.

3. Composition according to Claim 1 or 2, **characterized in that** the index is greater than 150, where the index describes the ratio of isocyanate actually used to calculated isocyanate for a stoichiometric reaction with polyol.

4. Composition according to at least one of Claims 1 to 3, **characterized in that** the mass ratio of polyol component to isocyanate component is greater than 1.

5. Composition according to at least one of Claims 1 to 4, **characterized in that** polyester polyols based on aromatic acids or aliphatic acids which have less than 10 carbon atoms are present as polyol component.

6. Composition according to at least one of Claims 1 to 5, **characterized in that** a blowing agent is present and the mass ratio of blowing agent to polyol component is 1-30:100.

7. Composition according to Claim 6, **characterized in that** the blowing agent is selected from among hydrocarbons having 5 carbon atoms.

8. Process for producing rigid polyurethane or polyisocyanurate foams, **characterized in that** a composition according to at least one of Claims 1 to 7 is used.

9. Rigid polyurethane or polyisocyanurate foams which can be obtained by foaming a composition according to any of Claims 1 to 7.

10. Use of rigid polyurethane or polyisocyanurate foams according to Claim 9 for producing insulation materials, insulation boards, in-situ foams or insulation foams.

## Revendications

1. Composition, qui est appropriée pour la fabrication de mousses dures de polyuréthane et qui comprend au moins une lécithine, au moins un catalyseur à base d'uréthane et/ou d'isocyanurate, au moins un agent gonflant, au moins un composant isocyanate et au moins un composant polyol, **caractérisée en ce que** le rapport en masse entre la lécithine et le composant polyol est inférieur à 2,5 sur 100, et des hydrocarbures contenant 3 à 5 atomes de carbone sont contenus en tant qu'agent gonflant.

2. Composition selon la revendication 1, **caractérisée en ce que** de l'eau est contenue dans la composition et le rapport en masse entre l'eau et le composant polyol est inférieur à 5 sur 100.

3. Composition selon la revendication 1 ou 2, **caractérisée en ce que** l'indice est supérieur à 150, l'indice décrivant le rapport entre l'isocyanate utilisé réellement et l'isocyanate calculé pour une réaction stoechiométrique avec le polyol.

4. Composition selon au moins l'une quelconque des revendications 1 à 3, **caractérisée en ce que** le rapport en masse entre le composant polyol et le composant isocyanate est supérieur à 1.

5. Composition selon au moins l'une quelconque des revendications 1 à 4, **caractérisée en ce que** des polyester-polyols à base d'acides aromatiques ou d'acides aliphatiques contenant moins de 10 atomes de carbone sont présents en tant que composant polyol.

6. Composition selon au moins l'une quelconque des revendications 1 à 5, **caractérisée en ce qu'**un agent gonflant est présent, le rapport en masse entre l'agent gonflant et le composant polyol étant de 1 à 30 sur 100.

7. Composition selon la revendication 6, **caractérisée en ce que** l'agent gonflant est choisi parmi les hydrocarbures contenant 5 atomes de carbone.

8. Procédé de fabrication de mousses dures de polyuréthane ou de polyisocyanurate, **caractérisé en ce qu'**une composition selon au moins l'une quelconque des revendications 1 à 7 est utilisée.

9. Mousses dures de polyuréthane ou de polyisocyanurate, pouvant être obtenues par moussage d'une composition selon l'une quelconque des revendications 1 à 7.

10. Utilisation de mousses dures de polyuréthane ou de polyisocyanurate selon la revendication 9 pour la fabrication de matériaux isolants, de panneaux isolants, de mousses de montage ou de mousses isolantes.
